# EUROPEAN PATENT APPLICATION

(11) **EP 2 141 630 A2**
(43) Date of publication of application: **06.01.2010**
(21) Application number: 09162541.8
(22) Date of filing: 12.06.2009
(51) Int. Cl.: G06F 21/24

(54) **Apparatus and method for secure recording of interviews**

(30) Priority: 04.07.2008 GB 0812219
(71) Applicant: Canford Audio Plc, Washington Tyne and Wear NE38 0BW (GB)
(72) Inventor: Brown, Durwin John, Durham, DH7 6SN (GB)
(74) Representative: Vinsome, Rex Martin

(57) **Abstract**

An apparatus (10) for generating an authentication code of a digital audio and/or video recording, and /or a digital image is enclosed. The apparatus includes input means for receiving electrical signals representing audio and/or video information and /or an image, recording means for generating a data file (4) containing a digital recording of said electrical signals, and a data processor (2) for generating an authentication code for said data file by applying a one-way algorithm to said data file.

## Description

### FIELD OF THE INVENTION

The present invention relates to an apparatus and method for secure recording of audio and/or video recordings stored as digital data files, or digital images. The invention relates particularly, but not exclusively, to an apparatus and method for demonstrating whether a data file containing an audio and/or video recording, or a still image, has been tampered with.

### BACKGROUND OF THE INVENTION

It is often necessary to store recordings of audio and/or video information, or digital images, securely. A particular application is the recording of interviews by the police, which may be later relied on as evidence. It is important to be able to verify that a recording has not been modified while stored, moved or copied.

However, storing large numbers of recorded interviews can require a large physical storage space, especially if the recordings are stored on media such as tape. It is therefore preferable to store the recordings as digital data files, which can occupy a relatively small storage space and can easily be transferred off-site for storage in a secure storage facility, via a communications network for example.

However, a problem arises in that a digital data file may be tampered with, in particular to alter the content of the recording stored in the data file. One approach to this problem is to secure the communication channels used to transfer, copy or store the data files by encrypting network packets as they transit the communication channels. A disadvantage of this approach is that it is not completely secure against attack, and it is therefore not possible to prove that tampering of a data file has not taken place.

Preferred embodiments of the present invention seek to overcome one or more of the above disadvantages of the prior art.

### SUMMARY OF THE INVENTION

According to a first aspect of the present invention, there is provided an apparatus for generating an authentication code of a digital audio and/or video recording and /or a digital image, the apparatus including:
input means for receiving electrical signals representing audio and/or video information and /or an image;
recording means for generating a data file containing a digital recording of said electrical signals; and
data processing means for generating an authentication code for said data file by applying a one-way algorithm to said data file.

The advantage of the present invention is that an authentication code is generated for each particular recording. The authentication code may be stored and used at a later time to verify that the data file has not been modified in any way. Another advantage is that the authentication code is generated within the apparatus which creates the data file, minimising the possibility of the data file being modified before generation of its authentication code, and providing those involved in recording with the means to repudiate tampering at the earliest possibility.

The data processing means may be adapted to output said authentication code.

The advantage of this feature is that the authentication code is made available for inspection.

The apparatus may be connectable to an external storage means for storing said data file;
wherein said data processing means is adapted to transfer said data file to said external storage means, and to generate said authentication code before transferring said data file to said external storage means.

The advantage of this feature is that the authentication code is representative of the data file before transfer to a storage means. This reduces the possibility of anyone modifying the data file before generation of the authentication code, as it would require access to the apparatus.

The data processing means may be adapted to output said authentication code before transferring said data file to said external storage means.

This reduces the possibility of anyone modifying the data file before generation and output of the authentication code, as it would require access to the data processing means of the apparatus.

The data processing means may be adapted to transfer said data file to an external storage means only after generation of the authentication code.

The advantage of this feature is that it increases confidence that the authentication code is based on the data file corresponding to the original recording, and that the data file has not been modified before generation of the authentication code.

The data processing means may be adapted to prevent modification of said data file by any other application until the authentication code has been generated.

Preventing access to the data file until after generation and/or output of the authentication code, ensures that the authentication code is representative of the original data file containing the recording.

The apparatus may further comprise user input means for inputting a command to stop recording, wherein the data processing means is adapted to terminate recording of the data file and generate the authentication code, immediately on receipt of a command to stop recording.

The advantage of this feature is that a "stop recording" command can be used to trigger the apparatus to generate the authentication code, thereby ensuring that the authentication code is generated immediately upon completion of the recording process.

The data processing means may be adapted to output said authentication code immediately after generation of said authentication code.

The advantage of this feature is that there is no opportunity to modify the data file before the authentication code is output. This increases confidence that the authentication code is representative of the data file containing the true original recording.

The data processing means may be adapted to output the authentication code in a format which can be inspected visually.

The advantage of this feature is that the authentication code can be made available to the public for inspection. It can then be used to verify that the data file has not been modified since the time of its recording.

The data processing means may be adapted to output said authentication code for display on a display screen connected to said apparatus.
The apparatus may be adapted to output a receipt on which the authentication code is printed.

This feature provides an authentication receipt which can be easily distributed to anyone having an interest in the integrity of the data file.

The one-way algorithm may be a secure hash algorithm.

By using a sufficiently complex algorithm, the checksum generated for a data file is virtually unique to that data file. Even changes of a single bit of the data file can be detected by a change in the checksum.

The one-way algorithm may be one of the hash algorithms SHA-256, SHA-1 and MD5.

An advantage of these algorithms is that they are all available to the public, so that anyone can produce the authentication code of a data file, and can test the algorithm.

The apparatus may further comprise:
receiving means for converting audio and/or video information or an optical image into said electrical signals.

The receiving means may be a microphone and/or a video camera.

The receiving means may be a digital camera.

According to a second aspect of the present invention, there is provided a method for generating an authentication code of a digital audio and/or video recording and /or a digital image, including the steps of:
receiving electrical signals representing audio and/or video information, or an image;
recording a data file containing a digital recording of said electrical signals; and
generating an authentication code of said data file by applying a one-way algorithm to said data file.

The method may further comprise the step of:
outputting said authentication code.

The method may further comprise the step of:
transferring said data file to an external storage means;
wherein said step of generating an authentication code is performed before the step of transferring said data file.

The method may further comprise the step of:
outputting said authentication code;
wherein said step of outputting said authentication code is performed before the step of transferring said data file.

Preferably, said step of generating said authentication code is performed immediately after said step of recording said data file.

The method may further comprise the step of:
receiving a command to stop recording;
wherein said step of generating said authentication code is triggered by said step of receiving said command to stop recording.

Preferably, said step of outputting said authentication code is performed immediately after said step of generating said authentication code.

The authentication code may be output in a format which can be inspected visually.

The authentication code may be output to a display screen.

The authentication code may be output as a printed receipt.

The one-way algorithm may be a secure hash algorithm.

The one-way algorithm may be one of the hash algorithms SHA-256, SHA-1 and MD5.

According to a third aspect of the present invention, there is provided a method for verifying the integrity of a digital audio and/or video recording and /or a digital image, comprising the steps of:
retrieving a first authentication code produced by applying a one-way algorithm to a first data file containing a digital audio and/or video recording, and /or a digital image, said first data file having been created and said first authentication code having been generated and output using the method according to the second aspect of the invention;
retrieving a second digital data file purporting to contain said digital audio and/or video recording, and /or said digital image;
generating a second authentication code by applying the same one-way algorithm to said second data file; and
comparing said first authentication code and said second authentication code to determine whether said second data file is identical to said first data file.

This provides a method for checking the integrity of a data file retrieved from storage means at a later time, using the authentication code output for a data file at the time of it being recorded. If the two authentication codes match, one can be confident that the data file has not been modified between its recording and subsequent retrieval.

### BRIEF DESCRIPTION OF THE DRAWINGS

A preferred embodiment of the present invention will now be described, by way of example only and not in any limitative sense, with reference to the accompanying drawing, in which:
Figure 1 illustrates an apparatus according to a first embodiment of the present invention; and
Figure 2 shows a flowchart illustrating a method according to a second embodiment of the present invention.

### DETAILED DESCRIPTION OF EMBODIMENTS

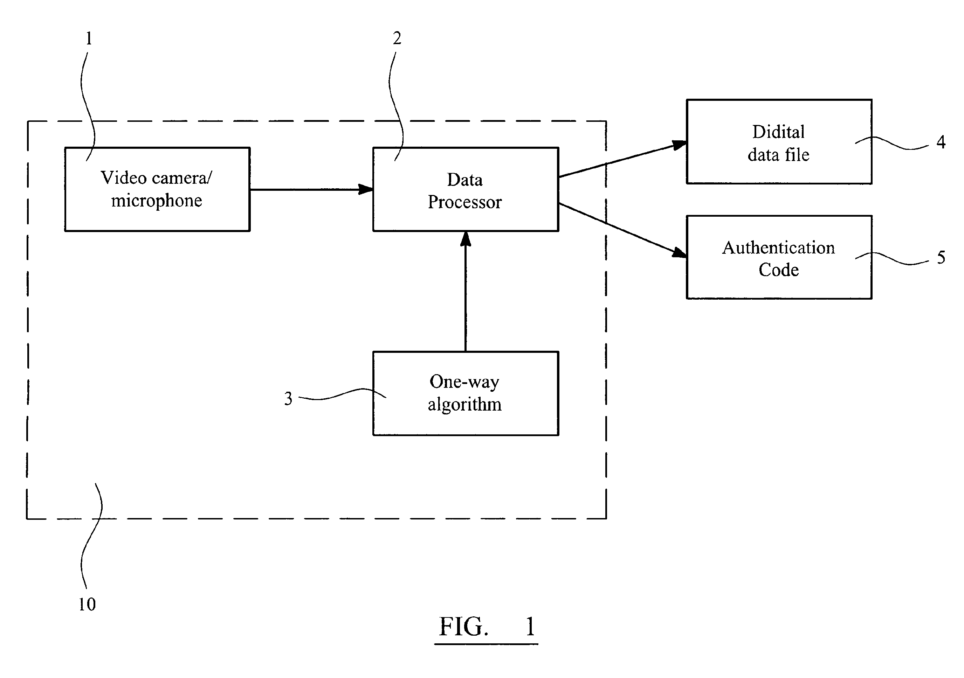

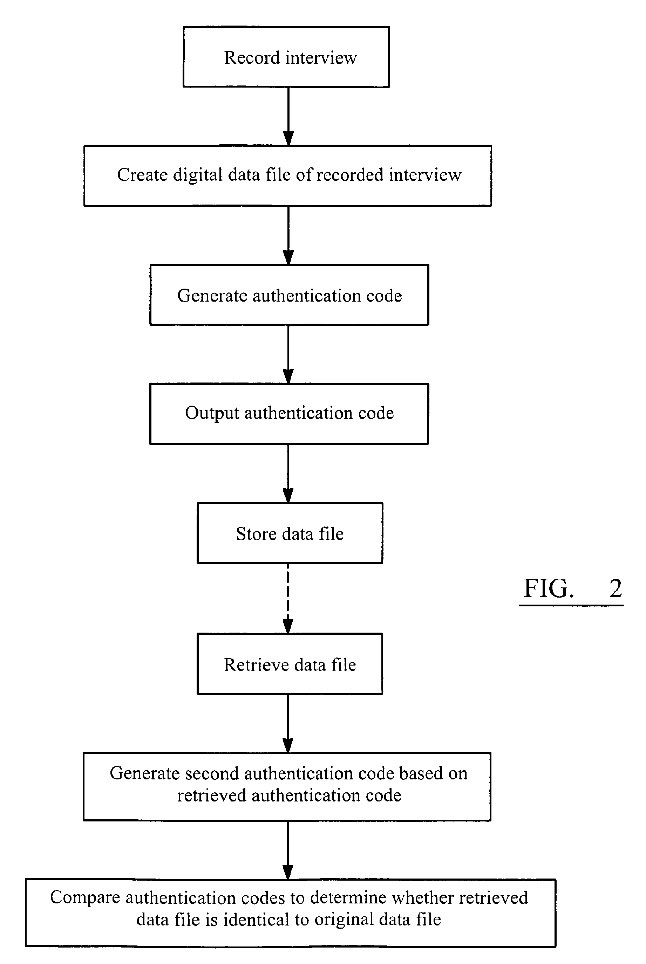

Referring to Figures 1 and 2, an interview or a scene is recorded using a recording apparatus 10, including a receiving device 1, for example a microphone, a video camera, or a digital camera, and a processor 2. The receiving device 1 converts light and/or sound into electrical signals, which are passed to the processor 2. The processor 2 receives the electrical signals, converts the signals into digital data and creates a data file 4. In this way, the processor 2 creates a data file 4 containing digital data representing an image or an audio and/or video recording.

The processor 2 may be a computer. The processor 2 may be integrated with the receiving device 1, or may be a separate unit, having inputs for receiving electrical signals from the receiving device 1. The processor 2 may include storage means for storing the data file as it is recorded. The processor 2 may also be used for controlling the receiving device 1.

The processor 2 applies a one-way algorithm 3 to the contents of the data file 4, to produce a digest of the file contents, which serves as an authentication code 5 for the content of the data file 4. The authentication code 5 is a code of appropriate length, such that it is highly improbable that a different data file will produce the same authentication code. In this way, the authentication code is virtually unique to the data file for practical purposes. Further details of the one-way algorithm 3 used will be given below.

The authentication code 5 is output at the time of recording the interview, preferably such that it is available for public inspection. For example, the authentication code 5 may be displayed on screen, or printed for distribution. It is important that the authentication code 5 is output at the earliest opportunity and before the data file 4 is transferred from the processor 2. The authentication code 5 may be stored in the recording apparatus 10, and /or copied or transferred to an external storage means, for example a networked storage apparatus, or a portable storage device or medium.

The data file 4 may then be stored in some appropriate way for long-term storage, either on the recording device, the processor 2, or elsewhere. The data file 4 may be transferred onto any storage device, another computing device, hard disk or other digital storage media. The data file 4 may be transferred off-site for storage.

The authentication code 5 allows the authenticity of a data file 4 to be demonstrated. Provided that the data file 4 has not been altered, application of the same one-way algorithm 3 to the data file 4 will produce the same authentication code 5 as the authentication code which was generated and output when the original data file of the recording was made. For example, it may be desirable to verify the integrity of the data file, or a copy of the data file, retrieved from its storage location at a later time. By applying the same one-way algorithm to the data file to generate a second authentication code, and comparing the second authentication code with the authentication code output at the time of recording the interview, it is possible to determine whether the data file has been modified. If the two authentication codes are identical, one can be confident that the data file has not been altered since the authentication code was originally calculated and output. The level of confidence depends upon the nature of the algorithm employed, and the length of the authentication code it produces. Preferably, if even a single binary digit of the data file has been changed between recording the original data file, and retrieval of the data file at a later date, then the two authentication codes will differ.

It is important that the authentication code 5 is generated before any modification of the data file 4 can take place, so that the authentication code 5 represents the original data file 4 storing a true representation of the original recording. Therefore, it is preferable that the authentication code 5 is generated immediately after completion of the recording, that is, immediately after creation of the data file 4. Typically, the timing and duration of a recording will be controlled by commands input by a user. A command to stop recording can be used to trigger the processor 2 to terminate the data file and to immediately generate the authentication code.

It is particularly important that the authentication code 5 is generated before the data file 4 is transferred or copied to any other device or storage medium. Copying and transfer of the data file 4 should only be permitted once the authentication code 5 has been generated, and preferably only after the authentication code 5 has been output.

The one-way algorithm 3 will next be described. The one-way algorithm 3 is an algorithm that maps an arbitrarily large data file to a much shorter bit string, in this case the authentication code.

For the purposes of the present invention, the one-way algorithm 3 must be one-way in nature, have sufficient computational complexity, provide a virtually unique authentication code for any recording, and be readily available in the public domain.

The one-way nature of the algorithm means that it is impossible to infer any part of the original data file from the authentication code generated by the algorithm. A simple example of an algorithm having this property is a parity algorithm, which returns 0 if a data file, represented as a string of "0"s and "1"s, contains an odd number of "1"s, and returns 1 if the data file contains an even number of "1"s. In this simple example, the parity algorithm produces a single bit length code, from which it is impossible to reconstruct the original data file. In the same way, the algorithm used in the present invention to generate an authentication code for a data file of a recording must be one-way: the one-way algorithm 3 can be applied to the data file 4 to generate the authentication code 5, but it is not possible to reconstruct the data file 4 from the authentication code 5.

For the purposes of the present invention, the one-way algorithm 3 must also have a sufficiently high level of computational complexity. It must take a significant number of computational operations to generate an authentication code 5 from a data file 4, in order to reduce the probability of a brute force attack succeeding in creating an amended data file that generates an identical authentication code. For example, if it took 1 second to calculate each digit of a 24 bit authentication code, then it would typically take 2²⁴ seconds, or over 6 months, to create an amended data file that generates an authentication code identical to that of the original, unamended data file. For a 64 bit authentication code, this time would increase to 584 billion years. In the present invention, the target data file of the one-way algorithm is an audio or video data file. In this case, each data file will be of a significant length: for example, a 20 minute audio file in WAV format is 100MB in size. This means that computing the digits of an authentication code for such a data file is likely to take significantly longer than 1 second.

For the purposes of the present invention, the one-way algorithm 3 must produce an authentication code 5 which is practically unique for each data file 4. In other words, the probability of a "collision", that is, two different data files yielding the same authentication code, must be negligible, compared to the probability of other unavoidable causes of fatal errors such as the system being destroyed by war or by a meteorite, say 10⁻²⁰ or less. The authentication code 5 should therefore be at least 64 bits long, in order to be confident that the authentication codes are virtually unique for each recorded data file 4. Ideally, if even a single bit of a data file is modified, the modified data file should produce an authentication code which differs from the authentication code of the original file.

It is important that the one-way algorithm 3 used in the method and apparatus of the present invention be readily available in the public domain. This allows a person challenging the validity of a data file to generate their own authentication code using the publicly available algorithm, and to scrutinise the algorithm used for any impropriety. Cryptographic grade hash functions generally serve as good algorithms, with the advantage that they are believed to be safe against malicious attacks. Examples of such algorithms, which would be suitable for use in the present application, include MD5 and the secure hash algorithms SHA-1 and SHA-256. These are all readily available in the public domain and are published by NIST.

The present invention provides a method and apparatus for securing the coding of interviews. Compared with the alternative approach of securing communications channels, the time taken to apply the algorithm to the entire data file is considerable, thus reducing the possibility of attack as compared to the encryption of relatively small network packets as they transit the communications channels.

It will be appreciated by persons skilled in the art that the above embodiments have been described by way of example only, and not in any limitative sense, and that various alterations and modifications are possible without departure from the scope of the invention as defined by the appended claims.

## Claims

1. An apparatus for generating an authentication code of a digital audio and/or video recording, and /or a digital image, the apparatus including:
input means for receiving electrical signals representing audio and/or video information and /or an image;
recording means for generating a data file containing a digital recording of said electrical signals; and
data processing means for generating an authentication code for said data file by applying a one-way algorithm to said data file.

2. An apparatus according to claim 1, including one or more of the following features:
(i) wherein the data processing means is adapted to output said authentication code;
(ii) wherein said apparatus is connectable to an external storage means for storing said first data file;
wherein said data processing means is adapted to transfer said data file to said external storage means, and to generate said authentication code before transferring said data file to said external storage means;
(iii) wherein said data processing means is adapted to transfer said data file to an external storage means only after generation of the authentication code;
(iv) wherein said data processing means is adapted to prevent modification of said data file by any other application until the authentication code has been generated.
(v) further comprising user input means for inputting a command to stop recording, wherein the data processing means is adapted to terminate recording of the data file and generate the authentication code, immediately on receipt of a command to stop recording;
(vi) wherein said one-way algorithm is a secure hash algorithm; or
(vii) further comprising:
receiving means for converting audio and/or video information and /or an optical image into said electrical signals.

3. An apparatus according to claim 2, including one or more of the following features:
(i) wherein said data processing means is adapted to output said authentication code before transferring said data file to said external storage means;
(ii) wherein said data processing means is adapted to output said authentication code immediately after generation of said authentication code;
(iii) wherein the data processing means is adapted to output the authentication code in a format which can be inspected visually;
(iv) wherein said data processing means is adapted to output said authentication code for display on a display screen connected to said apparatus;
(v) wherein the apparatus is adapted to output a receipt on which the authentication code is printed;
(vi) wherein said one-way algorithm is one of the hash algorithms SHA-256, SHA-1 and MD5;
(vii) wherein said receiving means is a microphone and/or a video camera; or
(viii) wherein said receiving means is a digital camera.

4. A method for generating an authentication code of a digital audio and/or video recording, and /or a digital image, including the steps of:
receiving electrical signals representing audio and/or video information and /or an image;
recording a data file containing a digital recording of said electrical signals; and
generating an authentication code of said data file by applying a one-way algorithm to said data file.

5. A method according to claim 4, including one or more of the following features:
(i) further comprising the step of:
outputting said authentication code;
(ii) further comprising the step of:
transferring said data file to an external storage means;
wherein said step of generating an authentication code is performed before the step of transferring said data file;
(iii) wherein said step of generating said authentication code is performed immediately after said step of recording said data file;
(iv) further including the step of:
receiving a command to stop recording;
wherein said step of generating said authentication code is triggered by said step of receiving said command to stop recording; or
(v) wherein said one-way algorithm is a secure hash algorithm.

6. A method according to claim 5, further comprising the step of:
outputting said authentication code;
wherein said step of outputting said authentication code is performed before the step of transferring said data file.

7. A method according to claim 5 or 6, wherein said step of outputting said authentication code is performed immediately after said step of generating said authentication code.

8. A method according to any one of claims 5 to 7, wherein said authentication code is output in a format which can be inspected visually.

9. A method according to any one of claims 5 to 8, wherein the authentication code is output to a display screen.

10. The method according to any one of claims 5 to 9, wherein said authentication code is output as a printed receipt.

11. A method according to any one of claims 5 to 10, wherein said one-way algorithm is one of the hash algorithms SHA-256, SHA-1 and MD5.

12. A method for verifying the integrity of a digital audio and/or video recording, or a digital image, comprising the steps of:
retrieving a first authentication code produced by applying a one-way algorithm to a first data file containing a digital audio and/or video recording and /or a digital image, said first data file having been created and said first authentication code having been generated and output using the method according to any one of claims 4 to 11;
retrieving a second digital data file purporting to contain said digital audio and/or video recording and /or said digital image;
generating a second authentication code by applying the same one-way algorithm to said second data file; and
comparing said first authentication code and said second authentication code to determine whether said second data file is identical to said first data file.
